# EUROPEAN PATENT SPECIFICATION

(11) **EP 2 526 781 B1**
(45) Date of publication and mention of the grant of the patent: **16.10.2013**
(21) Application number: 12169399.8
(22) Date of filing: 24.05.2012
(51) Int. Cl.: A23K 1/00, A23K 1/18

(54) **Product for feeding animals**
Produkt zur Tierfütterung
Produit pour l'alimentation d'animaux

(30) Priority: 27.05.2011 IT PD20110176
(43) Date of publication of application: 28.11.2012
(73) Proprietor: Sanypet S.p.a., 35023 Bagnoli di Sopra (PD) (IT)
(72) Inventor: Canello, Sergio, I-35037 Villa di Teolo (PD) (IT); Guidetti, Gianandrea, I-42100 Reggio Emilia (RE) (IT); Parise, Massimo, I-36075 Montecchio Maggiore (VI) (IT)
(74) Representative: Gallo, Luca

(56) References cited:
- WO-A1-2006/044572
- US-A1- 2005 186 307
- US-A1- 2006 228 448
- US-A1- 2011 027 419
- US-B1- 6 669 975

## Description

### Field of application

The present invention regards a product for feeding animals according to the preamble of the independent claim No. 1.

The product that is the object of the present invention is advantageously employed for feeding animals, in particular of domestic type such as dogs and cats, and allows administering supplements, vitamins or phytotherapeutic substances to the latter, or more generally allows administering active principles for therapeutic, medicinal or prevention purposes.

The invention is therefore inserted in the scope of the industry for producing products for feeding and treating animals, in particular of domestic type such as dogs and cats.

### State of the art

In the field of the production of products for feeding and treating animals, there has for some time been the need to design products which allow an easy and safe administration of substances for therapeutic, medicinal or prevention purposes to the animals.

Indeed, such substances, generally sensitive to heat, oxidizing agents and/or moisture, cannot be simply added to the formulations of food products, since they could be easily deteriorated, i.e. lose their therapeutic effectiveness, during the normal processes of production and processing of the food products themselves.

The substances for therapeutic, medicinal or prevention purposes are therefore usually administered to animals by means of suitable products, obtained by means of processes that allow preserving their functional activity characteristics intact.

For such purpose, products for administering therapeutic substances in tablet form have been available on the market for some time; such products generally comprise one or more substances for therapeutic purposes and a mixture of excipients, i.e. a mixture of support substances, substantially inert and suitable for carrying the therapeutic substance, or the therapeutic substances, and for conferring volume and form to the product.

The most commonly employed excipients comprise binders, such as sorbitol, mannitol, saccharose, glucose, xylitol, lactose etc., or cellulose and derivates thereof, or gum arabic, or disintegrating agents, such as starches and in particular corn starch.

However, such products in tablet form of known type, currently available on the market, have several drawbacks.

First of all, the excipients most commonly introduced in the aforesaid products provide nutrient substances that are not desired in the feeding of animals.

Sorbitol, mannitol, saccharose, glucose, lactose etc. introduced as binders in the products for the administration of therapeutic substances, for example, provide sugars, which are detrimental to the health of animals and particularly to dogs. Indeed, sugars, if continuously administered, can cause the onset of oral cavity or digestive system diseases, such as cavities or gastrointestinal disturbances, as well as the onset of chronic diseases, such as diabetes. In addition, some substances, such as lactose, can facilitate the appearance of food intolerances or allergies over time.

Cellulose, it too employed as binder, provides significant amounts of fiber, which in addition to being difficult for animals to digest can also interfere with the correct absorption of the therapeutic substances carried by the products.

Starch and particularly corn starch, employed as disintegrating agents, if not subjected to previous heat treatments, i.e. if they are not precooked, result substantially indigestible for animals.

Analogously, also gum arabic, introduced as a binder, results hard to digest for animals and particularly for dogs.

Therefore, the products for the administration of therapeutic substances in tablet form currently available on the market, comprising excipients of conventional form, can cause the onset of food intolerances or allergies, as well as diseases, even serious diseases in animals. In addition, the same products do not ensure an optimal absorption of the therapeutic substances they carry, since the excipients introduced therein can make the animal's digestive processes difficult and interfere with the aforesaid absorption.

Another drawback of the products in tablet form currently available on the market lies in the fact that the excipients conventionally employed in obtaining the abovementioned products are not able to mask the odor of some therapeutic substances, not appreciated by animals. In addition, the same excipients can confer a consistency to the products that is unpleasant for the animals. Consequently, the administration of such products to the animals does not result particularly easy, since the animals generally tend to refuse such products, i.e. they tend to select and discard them when mixed with food.

In order to remedy this final drawback, in the last few years products for feeding animals have been designed which are adapted to carry therapeutic, medicinal or prevention substances and at the same time maintain optimal desirability characteristics for animals.

For example, known from the patent EP 2185129 is a product for feeding animals which comprises kibbles for feeding purposes and a percentage ranging from 5% - 15% of kibbles for therapeutic purposes, the latter obtained starting from a mixture of ingredients in powder form compacted by means of dry molding. More in detail, the kibbles for therapeutic purposes comprise one or more therapeutic substances and a mixture of excipients, including one or more thickener components selected from among maltodextrin, corn starch, carob flour and dibasic calcium phosphate, and one or more hydrophilic minerals.

Even the product for feeding animals just described, however, has proven in practice to not be free of drawbacks.

The excipients introduced into the tablets for therapeutic purposes, in fact, and particularly the thickener components, have the same drawbacks of the excipients conventionally employed in the obtainment of products for administering therapeutic substances in tablet form, reported above.

Moreover, the product for feeding animals in accordance with the patent EP 2185129 is not capable of ensuring a correct and balanced nutrient supply for the animal that takes it, since the nutrient contribution given by the kibble for therapeutic purposes is not considered.

### Presentation of the invention

In this situation, the problem underlying the present invention is to provide a product for feeding animals which ensures a complete and balanced nutrient supply for animals that take it.

Another object of the present invention is to provide a product for feeding animals which allows administering, in an easy and safe manner to the animals, substances for therapeutic, medicinal or prevention purposes.

A further object of the present invention is to provide a product for feeding animals which is well tolerated by the animals and minimally allergenic.

Another object of the present invention is to provide a product for feeding animals which facilitates the digestion processes of the animal that takes it.

A further object of the present invention is to provide a product for feeding animals which facilitates the correct absorption of the substances for therapeutic, medicinal or prevention purposes that it carries.

Another object of the present invention is to provide a product for feeding animals which is appetizing for the animals.

Another object of the present invention is to provide a product for feeding animals which preserves the functional activity characteristics of drugs, vitamins, supplements, phytotherapeutic substances and therapeutic substances in general, inserted in such product.

These and still other objects are all attained by the product for feeding animals in accordance with the enclosed claims.

The technical characteristics of the invention, according to the aforesaid objects, are clearly seen in the contents of the below-reported claims and the advantages of the same will be more evident from the following detailed description, made with reference to a merely exemplifying and non-limiting embodiment.

### Detailed description

The product, object of the present invention, is intended to be employed for feeding animals and for the simultaneous administration to the latter of supplements, vitamins and phytotherapeutic substances, or more generally, for the administration of active principles for therapeutic, medicinal or prevention purposes, generically indicated below with the term 'therapeutic substances'.

For such purpose, the product for feeding animals according to the present invention comprises kibbles for feeding purposes and a percentage by weight ranging from 5% - 15%, and preferably from 6% - 8%, of tablets for therapeutic purposes, uniformly mixed with the kibbles for feeding purposes.

With the term 'kibble', it is generically intended below any one agglomerate of ingredients in compact form, with size and hardness susceptible to allowing its use also in *per se* conventional manner, entirely similar to the use provided for the conventional kibbles usually employed in the normal feeding of animals (especially domestic animals like dogs and cats) and well known to those skilled in the art of the field. Therefore, the kibble under discussion can be intended as a tablet, or as a cookie or granule, without departing from the protective scope of the present patent.

Preferably, the kibbles for feeding purposes are obtained via extrusion. More in detail, the kibbles for feeding purposes can be advantageously obtained starting from a paste of components inserted in an extrusion chamber, forced by the action of at least one worm screw until it passes through the holes of a die placed on the head of the extruder, and then cut by knives into the desired kibble form.

The tablets for therapeutic purposes are provided with a first fat-containing surface layer and comprise at least one therapeutic substance and a mixture of excipients. The therapeutic substance, in particular, can be selected from phytotherapeutic and natural substances as well as pharmaceutical principles or ingredients available on the market. More in detail, the therapeutic substance is preferably selected on its own or in combination with the product group comprising mineral, plant or animal substances having medical, curative or even only adjuvant effect in the prevention of diseases and/or pathologies. The therapeutic substance or substances are in particular selected as a function of the beneficial or curative effect that one desires to attain in the organism of the animal which assumes the product.

Therapeutic substances that have shown to be particularly effective, on their own or in combination, in treating or preventing common illnesses of animals - such as diseases of the intestinal, respiratory, auditory or tegumental apparatus, diseases of the oral cavity etc. - are for example: Arctium lappa (i.e. burdock), Aloe vera, Ribes nigrum, Malva silvestris, Rosmarinus officinalis, Rosa canina, Allium sativum (i.e. garlic), Tilia cordata (i.e. small-leaved lime), Melaleuca alternifolia, Milk enzymes, Chestnut extract, Oregano extract, Psyllium, Thymus vulgaris, Papaya, Pomegranate, Echinacea, Turmeric, Bioflavonoids, Ginseng, Pineapple, Sage, Thyme, Lysozyme, Propolis, Vitamin C, Spirulina, Grifola frondosa (Maitake), Polygonum L., Solanum lycopersicum (tomato), Vitis vinifera, shark cartilage, contoutina, glucosamine, Astaxanthin, Resveratrol, Carnitine.

The above-mentioned substances present beneficial properties that are *per se* known to the man skilled in the art of the field, and hence are not discussed here in detail.

Many of the abovementioned vitamins, phytotherapeutic substances or medicinal substances, or more generally many therapeutic substances employable in the tablets for therapeutic purposes in accordance with the present invention are sensitive to heat and/or to oxidizing agents. More in detail, such therapeutic substances can be easily deteriorated and have their functional activity decreased, if they are subjected to minimally high temperatures, i.e. even just a little higher than the ambient temperature, or if they are exposed to the action of oxidizing agents, such as water (in particular) or in any case moisture.

The extrusion processes currently known for obtaining kibbles provide for the attainment of pressures and temperatures that are incompatible with the therapeutic substances. Hence, the latter cannot be simply added to the components of the kibbles for feeding purposes obtained via extrusion, since the pressure and temperature values reached in the extrusion process and the rather long stay time at such temperature and pressure values would cause the denaturing of the heat-sensitive therapeutic substances themselves.

Advantageously, for the abovementioned grounds, the tablets for therapeutic purposes are obtained via dry and cold molding starting from a mixture of ingredients in powder form, and they comprise a moisture percentage ranging from 1% to 10% and preferably lower than or equal to 7% and, still more advantageously, lower than 6%.

The product for feeding animals in accordance with the present invention has an overall nutrient profile consisting of at least proteins, fats, carbohydrates, fibers and ashes.

In accordance with the idea underlying the present invention, the overall nutrient profile of the product, balanced and complete for feeding animals, is obtained by the sum of a first nutrient profile of the kibbles for feeding purposes and a second nutrient profile of the tablets for therapeutic purposes. The first nutrient profile of the kibbles for feeding purposes is selected to be complementary to the second nutrient profile of the tablets for therapeutic purposes for the obtainment of the overall nutrient profile of the product.

In addition, according to the idea underlying the present invention, the first nutrient profile of the kibbles for feeding purposes consists of at least: 15-37% proteins; 7.5-25% fats; 1-20% fibers; and 1-8% ashes.

The second nutrient profile of the tablets for therapeutic purposes consists of at least: 40-60% proteins; 4-8% fats; fibers in an amount lower than 3%; and 10-45% ashes.

In accordance with a preferred embodiment of the product for feeding animals according to the present invention, the second nutrient profile of the tablets for therapeutic purposes consists of at least: 50-60% proteins; 4-8% fats; 6-8% carbohydrates; fibers in an amount lower than 1%; 25-35% ashes.

The tablets for therapeutic purposes contain a moisture percentage ranging from 1% to 10% and preferably lower than or equal to 7%, as previously specified. Advantageously, the kibbles for feeding purposes contain a moisture percentage ranging from 3% to 14%, and preferably equal to about 8-9%.

The excipient mixture of the tablets for therapeutic purposes comprises a percentage by weight of one or more hydrolyzed proteins substantially ranging from 60% to 80% and a percentage by weight of mineral salts acting as glidants substantially ranging from 20% to 40%.

The first nutrient profile of the kibbles for feeding purposes is complementary to the second nutrient profile of the tablets for therapeutic purposes in order to obtain the overall nutrient profile of the product and to ensure a balanced and complete nutrient supply for the animal which assumes the product in accordance with the present invention; in other words, in order to ensure a pre-selected total supply of proteins, fats, carbohydrates, fibers and ashes.

Therefore, the single nutrient components of the kibbles for feeding purposes, i.e. the proteins, fats, carbohydrates, fibers and ashes, are calibrated in a manner complementary to the corresponding nutrient components of the tablets for therapeutic purposes, in order to ensure an optimal overall nutrient profile in the total product. Such optimal overall nutrient profile is pre-selected on the basis of the animal species to which the product is intended, on the basis of the animal's age and on his specific food or therapeutic needs.

Surprisingly, in fact, it was observed that the administration of therapeutic substances as part of a complete and balanced diet improves the therapeutic effectiveness of the substances themselves.

It was also observed that the introduction, in the tablets for therapeutic purposes, of an excipient mixture that is easily digestible and minimally allergenic facilitates the absorption of the therapeutic substances.

Hydrolyzed proteins, in particular, are easily digestible, given that they are constituted by peptides and polypeptides with very short molecular chain; they ensure the complete disintegration of the tablets for therapeutic purposes in the first section of the digestion apparatus, and consequently ensure the complete absorption of the therapeutic substances carried thereby. In addition, the hydrolyzed proteins introduced into the excipient mixture in accordance with the present invention are already ready to be administered to the animals, i.e. they have already undergone the necessary heat and sterilization treatments as well as the specific processing that makes them suitable for being administered to animals. Hence, during the tablet manufacturing process, further sterilization processes are not necessary, i.e. further heat treatments or specific processing are not required, beyond that already provided in the production of such hydrolyzed proteins, which render the latter suitable for assumption by the animals.

In accordance with a preferred embodiment of the product for feeding animals in accordance with the present invention, the hydrolyzed proteins introduced into the tablets for therapeutic purposes are selected from among fish hydrolyzed proteins and potato hydrolyzed proteins. It is observed, in fact, that such hydrolyzed proteins are capable of masking the odor of the therapeutic substances in an optimal manner; in some cases, such odor is unpleasant for animals, and could induce the animal itself to select and discard the tablets for therapeutic purposes. In addition, such hydrolyzed elements render the odor, consistency and taste of the tablets for therapeutic purposes quite similar to the odor, consistency and taste of the kibbles for feeding purposes, and therefore facilitate the assumption thereof by the animals together with the kibbles for feeding purposes.

Preferably, the excipient mixture employed in the manufacturing of the tablets for therapeutic purposes comprises a percentage by weight of fish hydrolyzed proteins ranging from 25% to 40%, and in particular from 30% to 35%, and a percentage by weight of potato hydrolyzed proteins ranging from 25% to 40%, and in particular from 33% to 38%.

Even if the tablets for therapeutic purposes, for the abovementioned grounds, preferably comprise hydrolyzed proteins, a percentage by weight ranging from 1% to 20% of the hydrolyzed proteins introduced as excipients in the tablets for therapeutic purposes can be substituted by one or more starches, such as potato starch; such starches are also capable of conferring the tablets for therapeutic purposes, together with the remaining hydrolyzed proteins, an odor, a consistency and a taste similar to the odor, consistency and taste of the kibbles for feeding purposes.

The tablets for therapeutic purposes therefore advantageously have odor, consistency and taste similar to the odor, consistency and taste of the kibbles for feeding purposes. The animal that assumes the product in accordance with the present invention, therefore, is not capable of distinguishing the tablets for therapeutic purposes from those for feeding purposes and is not induced to make a selection, i.e. possibly discarding/rejecting the kibbles containing therapeutic substances.

The mineral salts acting as glidants present in the excipient mixture of the tablets for therapeutic purposes are advantageously selected between calcium carbonate and dicalcium phosphate.

The mineral salts acting as glidants are introduced into the formulation of the tablets for therapeutic purposes in order to decrease the friction between the ingredients constituting the tablets and to facilitate the compaction thereof. If the kibbles are obtained via cold molding starting from a mixture of ingredients in powder form, the mineral salts acting as glidants also facilitate the sliding of the ingredients in powder form into the matrices of the mold during compression, and facilitate the ejection of the tablet from the mold. The mineral salts acting as glidants absorb the excess moisture possibly present in the tablets, facilitating the correct preservation of the therapeutic substances inside the tablets themselves, keeping their functional activity characteristics intact.

In addition, the mineral salts acting as glidants, in addition to carrying out the abovementioned functions, supply mineral salts of fundamental importance into the diet of each animal.

More in detail, the excipient mixture of the tablets for therapeutic purposes advantageously comprises a percentage by weight ranging from 10% to 20% of calcium carbonate and a percentage by weight ranging from 10% to 20% of dicalcium phosphate.

It has in fact been detected that the combined presence of calcium carbonate and dicalcium phosphate is particularly important for ensuring suitable mechanical properties for the tablets for therapeutic purposes over time. The tablets for therapeutic purposes containing both the aforesaid mineral salts acting as glidants have proven capable of remaining intact, without breaking up or crumbling, for longer times with respect to tablets for therapeutic purposes comprising only one of the aforesaid mineral salts acting as glidants.

Calcium carbonate and dicalcium phosphate are preferably selected as mineral salts acting as glidants, since they supply calcium and phosphorus, elements extremely important in the diet of animals. As is known, in fact, the supply of a correct calcium/phosphorus ratio facilitates the development of the osteoarticular apparatus of the animal during growth and the good maintenance of the same apparatus in adult life.

Dicalcium phosphate also carries out a hardening action, optimizing the hardness and the consistency of the tablets and conferring improved mechanical properties to the latter.

Preferably, the excipient mixture of the tablets for therapeutic purposes comprises a percentage by weight of mineral salts acting as glidants equal to about 30% and, more in detail, comprises a percentage by weight ranging from 15-18% of calcium carbonate and a percentage by weight ranging from 12-15% of dicalcium phosphate.

The tablets for therapeutic purposes present in the product in accordance with the present invention therefore advantageously lack binder excipients of conventional type, such as sorbitol, mannitol, xylitol, saccharose, glucose, lactose, cellulose and derivatives thereof, arabic gum, etc., which would supply nutrient substances that are not desired in the diet of the animals.

Advantageously, the fat percentages of the tablets for therapeutic purposes are supplied by the first fat-containing surface layer of the tablets.

More in detail, such first fat-containing surface layer is advantageously obtained via deposition on the surface of the tablets of a mixture comprising products of animal and/or plant origin, such as products made from meats, offal and fats. The latter, in addition to supplying the necessary quantity of oils and fats indispensable in the diet of each animal, make the tablets for therapeutic purposes more appetizing for the animals themselves.

In addition, the first fat-containing surface layer blocks the penetration of moisture inside the tablets for therapeutic purposes, thus preventing the therapeutic substances contained therein from being deteriorated.

Advantageously, also the kibbles for feeding purposes comprise a second fat-containing surface layer, which, in addition to contributing the correct supply of fats of the kibbles and making the kibbles more appetizing, also retains the moisture inside the kibbles, preventing the latter from excessively drying out and becoming less appetizing for the animal which assumes the product, and preventing the moisture contained in the kibbles from being transferred to the tablets. The second fat-containing surface layer is advantageously obtained via deposition on the surface of the kibbles of a mixture comprising products of animal and/or plant origin.

The fatty substances are not inserted in the initial formulation of the kibbles for feeding purposes and of the tablets for therapeutic purposes, since they could interfere with the production processes of the tablets and of the kibbles themselves. In particular, with regard to the tablets for therapeutic purposes, if the latter are obtained via molding, the presence of oily and fatty substances would reduce the compaction capacity of the mixture of ingredients in powder form. With regard to the kibbles for feeding purposes, if the latter are obtained via extrusion, the presence of oily or fatty substances during extrusion would inhibit the process of gelatinization of the starches, such that the kibbles for feeding purposes thus obtained would be harder for the animals to digest.

Advantageously, the kibbles for feeding purposes and the tablets for therapeutic purposes can have the surface covered with a mixture in liquid form, i.e. in powder form containing appetizing products (or "digest") suitable for further improving the appetizing nature of the product for feeding animals in accordance with the present invention. The mixture containing appetizing products can in particular be distributed on the surface of the kibbles for feeding purposes and possibly also on the surface of the tablets for therapeutic purposes, together with the mixture containing fats, i.e. before or after the distribution of the latter.

Of course, also the mixture containing appetizing products possibly distributed on the surface of the kibbles for feeding purposes and on the surface of the kibbles for therapeutic purposes, which generally comprises products with protein-lipid base, contributes to the definition of the first nutrient profile of the kibbles for feeding purposes and to the definition of the second nutrient profile of the tablets for therapeutic purposes, i.e. it contributes the definition of the overall nutrient profile of the product for feeding animals in accordance with the present invention.

The overall nutrient profile of the product, e.g. in the case of a product for feeding a dog during growth, can comprise (for example): 20-40% proteins; 8-25% fats; 18-65% carbohydrates; and ashes in an amount less than 8%. In the case of a product for feeding an adult dog, the quantities of proteins and fats can be reduced.

Advantageously, if the product, object of the present invention, is intended for feeding cats, the overall carbohydrates supplied by the kibbles for feeding purposes and by the tablets for therapeutic purposes will be reduced, such nutrient component covering a lower importance in the feline diet with respect to other nutrient components, e.g. proteins and fats.

The carbohydrates supplied by the tablets for therapeutic purposes, in particular, are akin (food-wise) to the carbohydrates supplied by the kibbles for food purposes, and are therefore well-tolerated by the animals.

The tablets for therapeutic purposes advantageously have a density value that diverges at most 20% from the density value of the kibble for feeding purposes, such that during the steps of production, processing, transferring, transporting and storing of the product in accordance with the present invention there is no segregation phenomena between the kibbles for feeding purposes and the tablets for therapeutic purposes. Such characteristic therefore ensures a uniform distribution of the tablets for therapeutic purposes inside the product for feeding animals and ensures that each of the different product doses administered to the animal has a substantially constant content of tablets for therapeutic purposes with respect to the total administered product.

The finding thus conceived therefore attains the pre-established objects.

Of course, in its practical achievement it can also assume forms and configurations that are different from that illustrated above, without departing from the present protective scope.

In addition, all details can be substituted with technically equivalent elements, and the size, shape and materials employed can be of any type in accordance with the requirements.

## Claims

1. Product for feeding animals having an overall nutrient profile consisting of at least proteins, fats, carbohydrates, fibers and ashes, such product comprising:
- kibbles for feeding purposes; and
- a percentage by weight ranging from 5% to 15% of tablets for therapeutic purposes provided with a first fat-containing surface layer and comprising at least one therapeutic substance and a mixture of excipients;
**characterized in that**:
• the overall nutrient profile of said product, balanced and complete for feeding animals, is obtained by the sum of a first nutrient profile of said kibbles for feeding purposes and a second nutrient profile of said tablets for therapeutic purposes, said first nutrient profile of said kibbles for feeding purposes being selected to be complementary to said second nutrient profile of said tablets for therapeutic purposes for the obtainment of said overall nutrient profile of said product;
• said first nutrient profile of said kibbles for feeding purposes consists of at least: 15-37% proteins; 7.5-25% fats; 20-70% carbohydrates; 1-20% fibers; 1-8% ashes;
• said second nutrient profile of said tablets for therapeutic purposes consists of at least: 40-60% proteins; 4-8% fats; 5-10% carbohydrates; fibers in an amount lower than 3%; 10-45% ashes; said tablets for therapeutic purposes containing a moisture percentage ranging from 1% to 10% and the excipient mixture of said tablets for therapeutic purposes comprising at least a percentage by weight of at least one hydrolyzed protein substantially ranging from 60% to 80% and at least a percentage by weight of at least one mineral salt acting as a glidant substantially ranging from 20% to 40%.

2. Product for feeding animals according to claim 1, **characterized in that** said at least one mineral salt acting as a glidant is selected between calcium carbonate and dicalcium phosphate.

3. Product for feeding animals according to claim 2, **characterized in that** said excipient mixture of said tablets for therapeutic purposes comprises a percentage by weight of calcium carbonate substantially ranging from 10% to 20% and a percentage by weight of dicalcium phosphate substantially ranging from 10% to 20%.

4. Product for feeding animals according to claim 1, **characterized in that** said fat percentages of said tablets for therapeutic purposes are provided by said first fat-containing surface layer.

5. Product for feeding animals according to claim 1, **characterized in that** said kibbles for feeding purposes comprise a second fat-containing surface layer and said fat percentages of said kibbles for feeding purposes are at least partly provided by said second fat-containing surface layer.

6. Product for feeding animals according to claim 1, **characterized in that** said second nutrient profile of said tablets for therapeutic purposes consists of at least: 50-60% proteins; 4-8% fats; 6-8% carbohydrates; fibers in an amount lower than 1%; 25-35% ashes;

7. Product for feeding animals according to claim 1, **characterized in that** said at least one hydrolyzed protein comprised in said excipient mixture of said tablets for therapeutic purposes is selected between fish hydrolyzed proteins and potato hydrolyzed proteins.

8. Product for feeding animals according to claim 7, **characterized in that** the excipient mixture of said tablets for therapeutic purposes comprises a percentage by weight of fish hydrolyzed proteins ranging from 25% to 40% and a percentage by weight of potato hydrolyzed proteins ranging from 25% to 40%.

9. Product for feeding animals according to claim 1, **characterized in that** said tablets for therapeutic purposes are obtained via dry and cold molding starting from a mixture of ingredients in powder form, and comprise a moisture percentage lower than or equal to 7%.

10. Product for feeding animals according to claim 9, **characterized in that** said at least one therapeutic substance is selected on its own or in combination with the product group comprising mineral, plant or animal substances having medical effect and being sensitive to heat and/or to oxidizing agents.

## Patentansprüche

1. Tierfutterprodukt mit einem Gesamtnährwertprofil, das mindestens aus Proteinen, Fetten, Kohlenhydraten, Fasern und Aschen gebildet ist, wobei das Produkt Folgendes umfasst:
- Futterkroketten; und
- einen Gewichtsprozentsatz zwischen 5% und 15% von Tabletten zur therapeutischen Behandlung, die mit einer ersten fetthaltigen Oberflächenschicht versehen sind und mindestens eine therapeutische Substanz und ein Gemisch von pharmazeutischen Hilfsstoffen umfassen;
**dadurch gekennzeichnet, dass**:
• das ausgewogene und zur Ernährung von Tieren vollständige Gesamtnährwertprofil dieses Produkts aus der Summe eines ersten Nährwertprofils dieser Futterkroketten und eines zweiten Nährwertprofils dieser Tabletten zur therapeutischen Behandlung erhalten wird, wobei das erste Nährwertprofil der Futterkroketten komplementär zum zweiten Nährwertprofil der Tabletten zur therapeutischen Behandlung gewählt ist, um das Gesamtnährwertprofil des Produkts zu erhalten;
• das erste Nährwertprofil der Futterkroketten mindestens aus Folgendem gebildet ist: 15% bis 37% Proteine; 7,5% bis 25% Fette; 20% bis 70% Kohlenhydrate; 1% bis 20% Fasern; 1% bis 8% Aschen;
• das zweite Nährwertprofil der Tabletten zur therapeutischen Behandlung mindestens aus Folgendem gebildet ist: 40% bis 60% Proteine; 4% bis 8% Fette; 5% bis 10% Kohlenhydrate; weniger als 3% Fasern; 10% bis 45% Aschen; wobei die Tabletten zur therapeutischen Behandlung einen Feuchtigkeitsprozentsatz zwischen 1% und 10% enthalten und das Gemisch von pharmazeutischen Hilfsstoffen dieser Tabletten zur therapeutischen Behandlung mindestens einen Gewichtsprozentsatz im Wesentlichen zwischen 60% und 80% von mindestens einem Proteinhydrolysat und mindestens einen Gewichtsprozentsatz im Wesentlichen zwischen 20% und 40% von mindestens einem Mineralsalz zur Fließregulierung umfasst.

2. Tierfutterprodukt nach Anspruch 1, **dadurch gekennzeichnet, dass** das Mineralsalz zur Fließregulierung aus Calciumcarbonat und Dicalciumphosphat ausgewählt ist.

3. Tierfutterprodukt nach Anspruch 2, **dadurch gekennzeichnet, dass** das Gemisch von pharmazeutischen Hilfsstoffen der Tabletten zur therapeutischen Behandlung einen Gewichtsprozentsatz im Wesentlichen zwischen 10% und 20% von Calciumcarbonat und einen Gewichtsprozentsatz im Wesentlichen zwischen 10% und 20% von Dicalciumphosphat umfasst.

4. Tierfutterprodukt nach Anspruch 1, **dadurch gekennzeichnet, dass** die Prozentsätze von Fetten der Tabletten zur therapeutischen Behandlung durch die erste fetthaltige Oberflächenschicht eingebracht werden.

5. Tierfutterprodukt nach Anspruch 1, **dadurch gekennzeichnet, dass** die Futterkroketten eine zweite fetthaltige Oberflächenschicht umfassen und die Prozentsätze von Fetten dieser Futterkroketten zumindest teilweise durch diese zweite fetthaltige Oberflächenschicht eingebracht werden.

6. Tierfutterprodukt nach Anspruch 1, **dadurch gekennzeichnet, dass** das zweite Nährwertprofil der Tabletten zur therapeutischen Behandlung mindestens aus Folgendem gebildet ist: 50% bis 60% Proteine; 4% bis 8% Fette; 6% bis 8% Kohlenhydrate; weniger als 1% Fasern; 25% bis 35% Aschen.

7. Tierfutterprodukt nach Anspruch 1, **dadurch gekennzeichnet, dass** das mindestens eine Proteinhydrolysat, das in dem Gemisch von pharmazeutischen Hilfsstoffen der Tabletten zur therapeutischen Behandlung enthalten ist, aus Fischproteinhydrolysaten und Kartoffelproteinhydrolysaten ausgewählt ist.

8. Tierfutterprodukt nach Anspruch 7, **dadurch gekennzeichnet, dass** das Gemisch von pharmazeutischen Hilfsstoffen der Tabletten zur therapeutischen Behandlung einen Gewichtsprozentsatz im Wesentlichen zwischen 25% und 40% von Fischproteinhydrolysaten und einen Gewichtsprozentsatz im Wesentlichen zwischen 25% und 40% von Kartoffelproteinhydrolysaten umfasst.

9. Tierfutterprodukt nach Anspruch 1, **dadurch gekennzeichnet, dass** die Tabletten zur therapeutischen Behandlung durch Kaltpressen und durch Trockenpressen aus einem Gemisch von pulverförmigen Ingredienzien erhalten werden und einen Feuchtigkeitsprozentsatz von weniger als oder gleich 7% enthalten.

10. Tierfutterprodukt nach Anspruch 9, **dadurch gekennzeichnet, dass** die mindestens eine therapeutische Substanz einzeln oder in Kombination aus der Produktfamilie ausgewählt ist, die mineralische, pflanzliche oder tierische Substanzen mit arzneilicher Wirkung umfasst, die empfindlich gegenüber Wärme und/oder Oxidationsmitteln sind.

## Revendications

1. Produit pour l'alimentation d'animaux ayant un profil nutritionnel global formé par au moins des protéines, des lipides, des glucides, des fibres et des cendres, lequel produit comprend :
- des croquettes à des fins d' alimentation ; et
- un pourcentage en poids compris entre 5 % et 15 % de comprimés à des fins thérapeutiques dotés d'une première couche superficielle graissée et comprenant au moins une substance thérapeutique et un mélange di excipients ;
**caractérisé en ce que** :
• le profil nutritionnel global dudit produit, équilibré et complet pour l'alimentation d'animaux, est obtenu par la somme d'un premier profil nutritionnel desdites croquettes à des fins d'alimentation et d'un deuxième profil nutritionnel desdits comprimés à des fins thérapeutiques, ledit premier profil nutritionnel desdites croquettes à des fins d'alimentation étant sélectionné complémentaire audit deuxième profil nutritionnel desdites comprimés à des fins thérapeutiques pour l'obtention dudit profil nutritionnel global dudit produit ;
• ledit premier profil nutritionnel desdites croquettes à des fins d'alimentation est formé par au moins : des protéines entre 15% et 37% ; des lipides entre 7,5% et 25% ; des glucides entre 20% et 70% ; des fibres entre 1% et 20 % ; des cendres entre 1% et 8% ;
• ledit deuxième profil nutritionnel desdits comprimés à des fins thérapeutiques est formé par au moins : des protéines entre 40% et 60% ; des lipides entre 4% et 8% ; des glucides entre 5% et 10% ; des fibres en quantité inférieure à 3% ; des cendres entre 10% et 45% ; lesdits comprimés à des fins thérapeutiques contenant un pourcentage d'humidité compris entre 1% et 10% et le mélange d'excipients desdits comprimés à des fins thérapeutiques comprenant au moins un pourcentage en poids compris sensiblement entre 60% et 80% d'au moins un hydrolysat protéique et au moins un pourcentage en poids compris sensiblement entre 20% et 40% d'au moins un sel minéral glissant.

2. Produit pour l'alimentation d'animaux selon la revendication 1, **caractérisé en ce que** ledit au moins un sel minéral glissant est choisi entre carbonate de calcium et phosphate bi-calcique.

3. Produit pour l'alimentation d'animaux selon la revendication 2, **caractérisé en ce que** ledit mélange d'excipients desdits comprimés à des fins thérapeutiques comprend un pourcentage en poids compris sensiblement entre 10% et 20% de carbonate de calcium et un pourcentage en poids compris sensiblement entre 10% et 20% de phosphate bi-calcique.

4. Produit pour l'alimentation d'animaux selon la revendication 1, **caractérisé en ce que** lesdits pourcentages de lipides desdits comprimés à des fins thérapeutiques sont apportés par ladite première couche superficielle graissée.

5. Produit pour l'alimentation d'animaux selon la revendication 1, **caractérisé en ce que** lesdites croquettes à des fins d'alimentation comprennent une deuxième couche superficielle graissée et lesdits pourcentages de lipides desdites croquettes à des fins d'alimentation sont au moins partiellement apportés par ladite deuxième couche superficielle graissée.

6. Produit pour l'alimentation d'animaux selon la revendication 1, **caractérisé en ce que** ledit deuxième profil nutritionnel desdites comprimés à des fins thérapeutiques est formé par au moins : des protéines entre 50% et 60% ; des lipides entre 4% et 8% ; des glucides entre 6% et 8% ; des fibres en quantité inférieure à 1% ; des cendres entre 25 et 35 % ;

7. Produit pour l'alimentation d'animaux selon la revendication 1, **caractérisé en ce que** ledit au moins un hydrolysat protéique compris dans ledit mélange d'excipients desdits comprimés à des fins thérapeutiques est choisi entre hydrolysats protéiques de poisson et hydrolysats protéiques de pommes de terre.

8. Produit pour l'alimentation d'animaux selon la revendication 7, **caractérisé en ce que** le mélange d'excipients desdits comprimés à des fins thérapeutiques comprend un pourcentage en poids compris entre 25% et 40% d'hydrolysats protéiques de poisson et un pourcentage en poids compris entre 25% et 40% d'hydrolysats protéiques de pommes de terre.

9. Produit pour l'alimentation d'animaux selon la revendication 1, **caractérisé en ce que** lesdits comprimés à des fins thérapeutiques sont obtenus par moulage à pression à froid et à sec à partir d'un mélange d'ingrédients en poudre et comprennent un pourcentage d'humidité inférieure ou égale à 7%.

10. Produit pour l'alimentation d'animaux selon la revendication 9, **caractérisé en ce que** ladite au moins une substance thérapeutique est choisie individuellement ou en combinaison dans la famille de produits comprenant des substances minérales, végétales ou animales avec effet médicamenteux sensibles à la chaleur et/ou aux agents oxydants.
